# EUROPEAN PATENT APPLICATION

(11) **EP 4 786 085 A1**
(43) Date of publication of application: **05.08.2026**
(21) Application number: 25154708.9
(22) Date of filing: 29.01.2025
(51) Int. Cl.: B23K 9/20, B23K 11/00

(54) **STUD WELDING HEAD AND SYSTEM FOR STUD WELDING**

(71) Applicant: Volvo Car Corporation, 405 31 Göteborg (SE)
(72) Inventor: STEVANOVIC, Nikola, 40531 Göteborg (SE); DOLINSKI, Bartosz, 40531 Göteborg (SE); APPELGREN, Mikael, 40531 Göteborg (SE)
(74) Representative: Kransell & Wennborg KB

(57) **Abstract**

The disclosure relates to a stud welding head (200). The stud welding head (200) comprises a housing (210), a movable positioning leg (220) being configured to move with respect to the housing (210). Moreover, the stud welding head (200) comprises at least one spatter removing blade (230) being rigidly fixed to the housing (210). A cutting edge (231) of the at least one spatter removing blade (230) is arranged adjacent to a surface of the movable positioning leg (220), such that a movement of the movable positioning leg (220) at least partially removes a weld spatter accumulated (291), from stud welding, on the surface of the movable positioning leg (220). The disclosure further relates to a system for stud welding.

## Description

### TECHNICAL FIELD

The present disclosure relates to a stud welding head.

The present disclosure further relates to a system for stud welding.

### BACKGROUND ART

During stud welding, a weld spatter may scatter into the air. This weld spatter may stick to a nearby object such as a supporting leg for positioning the stud welding device. When the weld spatter eventually piles up on the supporting leg, the welding process may need to be temporarily paused to remove the accumulated weld spatter or even to replace the supporting leg entirely.

### SUMMARY

The objective of the present disclosure is to further improve the mitigation of the weld-spatter accumulation on the movable positioning leg.

The problem is at least partially solved or alleviated by the subject matter of the independent claims of the present disclosure, wherein further examples are incorporated in the dependent claims.

According to a first aspect, there is provided a stud welding head. The stud welding head comprises a housing, and a movable positioning leg being configured to move with respect to the housing. Moreover, the stud welding head comprises at least one spatter removing blade being rigidly fixed to the housing. A cutting edge of the at least one spatter removing blade is arranged adjacent to a surface of the movable positioning leg, such that a movement of the movable positioning leg at least partially removes a weld spatter accumulated, from stud welding, on the surface of the movable positioning leg.

The stud welding head may be couplable to or rigidly fixable to a robotic arm.

The stud welding head may be electrically connected to a welding generator.

Herein, a module may be coupled or rigidly fixed to another module by any coupling or fixing mechanism.

For instance, the housing may comprise at least one protrusion and/or recess for coupling or rigidly fixing the stud welding head to the corresponding respective at least one recess and/or protrusion comprised in the stud welding device.

The movable positioning leg may be movable in any direction with respect to the housing.

The movable positioning leg may aid positioning of the stud welding head.

For instance, when the movable positioning leg is moved in a first direction, e.g., away from the housing, the movable positioning may selectively contact or engage with a surface, e.g., a surface of a work piece, thereby aid positioning of the stud welding head.

Accordingly, the movable positioning leg may be referred to as a movable support leg or a hold-down leg.

The movable positioning leg may be selectively retracted or withdrawn from a contact or an engagement.

Aiding the positioning of the stud welding head may comprise using the movable positioning leg as a mechanical support, specifically when stud welding.

The cutting edge may comprise a portion with a reducing thickness along a direction.

The cutting edge may be a comparatively slender and/or tapering part or portion of the tapering part that is configured to scrape off weld spatter.

The cutting edge may be of any form, e.g., a V-shaped, a bevel, a chamfer, a convex, a hollow, a tapered, a round, a square, or the like.

Herein, the term "adjacent" may refer to a distance, specifically a shortest distance, between two objects for performing a specific action or for achieving a specific effect.

For instance, when the cutting edge of the at least one spatter removing blade may be arranged adjacent to a surface of the movable positioning leg, the distance between the cutting edge and the surface of the movable positioning leg may be defined by the shortest Euclidean distance between a point on the cutting edge and a point on the surface of the movable positioning leg.

The upper limit of such distance may be defined by the ability of the cutting edge of the at least one spatter removing blade to at least partially remove the weld spatter accumulated on the movable positioning leg.

The lower limit of such distance may be defined by the ability to allow, i.e., not hinder, the movement of the movable positioning leg.

The at least partial removal of the accumulated weld spatter may comprise or is at least partial cutting off, scrapping off, and/or stripping off of at least a portion of the weld spatter accumulated on the movable positioning leg.

The stud welding head of the first aspect advantageously improves the mitigation of the weld-spatter accumulation on the movable positioning leg, specifically by at least partially removing the accumulated weld spatter on the movable positioning leg through moving the movable positioning leg to cause a relative motion between the movable positioning leg and the at least one spatter removing blade.

According to an example, the movable positioning leg is configured to move by extending from or retracting towards the housing in a single axis.

The term "extending" may be or comprise lengthening, stretching, elongating, or the like.

Additionally or alternatively, the term "extending" may be a course of action seen or observed from a perspective of the housing.

For instance, when a part of the movable positioning leg is initially hidden away inside the housing, a movement by which the hidden part of the movable positioning leg comes out or is exposed may be referred to as extending, from the point of view of the housing.

Additionally or alternatively, the term "extending" may be defined by an increase in a Euclidean distance between a point on the movable positioning leg and a point on the surface of the housing.

The term "retracting" may be or comprise withdrawing, shrinking, or the like.

Additionally or alternatively, the term "retracting" may be a course of action seen or observed from a perspective of the housing.

For instance, when a part of the movable positioning leg is initially exposed, a movement by which the exposed part of the movable positioning leg is hidden away may be referred to as retracting towards the housing from the point of view of the housing.

Additionally or alternatively, the term "retracting" may be defined by a decrease in a Euclidean distance between a point on the movable positioning leg and a point on the surface of the housing.

The stud welding head of the above example advantageously improves the mitigation of the weld-spatter accumulation on the movable positioning leg by moving the movable positioning leg in a specific way which allows an effective at least partial removal of the accumulated weld spatter.

According to an example, the movable positioning leg is abuttable to a surface for positioning the stud welding head relative to a workpiece during stud welding when in an extended state.

The movable positioning leg may abut any surface, different from the surface of the workpiece e.g., a surface of a working station on which the workpiece lies.

Abutting the movable positioning leg to any surface may serve as a mechanical support, which in turn may aid the positioning of the stud welding head for stud welding.

According to an example, a retraction of the movable positioning leg at least partially removes the accumulated weld spatter.

The cutting edge of the at least one spatter removing blade may be arranged towards the opposite direction of the direction of the retraction, so as to achieve the at least partial removal of the accumulated weld spatter.

Alternatively or additionally, the cutting edge of the at least one spatter removing blade may be arranged to form an inclined or declined angle with respect to the direction of the retraction, so as to achieve the at least partial removal of the accumulated weld spatter.

The stud welding head of the above example advantageously improves effectiveness of the removal of the accumulated weld spatter.

According to an example, the stud welding head further comprises a stud guide being rigidly fixed to the housing, wherein the movable positioning leg is movable in parallel with a guiding axis through which a welding stud is guidable through the stud guide.

The stud guide may be hollow for guiding the welding stud.

The guiding axis may be defined by a path through which the welding stud travels until the guided welding stud comes to a halt and is ready for stud welding.

The stud welding guide may be arranged for stopping or immobilizing the guided welding stud for stud welding.

The movable positioning leg may be movable in parallel with a portion of the guiding axis.

The portion of the guiding axis may be or be in parallel with a central axis of or through the guided welding stud that is stationary and set for stud welding.

The stud welding head of the above example advantageously improves the mitigation of the weld-spatter accumulation on the movable positioning leg by moving the movable positioning leg in a specific way which allows an effective at least partial removal of the accumulated weld spatter.

According to an example, the movable positioning leg has an inner cavity, and wherein the stud guide is arranged inside the inner cavity of the movable positioning leg.

At least a portion of the outer surface of the stud guide may be exposed depending on the position of the movable positioning leg.

Additionally or alternatively, the outer surface of the stud guide may be hidden away inside the movable positioning leg depending on the position of the movable positioning leg.

According to an example, the movable positioning leg is tube-shaped.

The stud guide may be tube-shaped.

Herein, an object may be referred to as tube-shaped when the object is hollow and elongated, e.g. cylinder-shaped.

According to an example, the at least one spatter removing blade comprises a curved section or is curved.

The cutting edge of the at least one spatter removing blade may comprise a curved section or be curved.

The at least one spatter removing blade may be tube-shaped.

The cutting edge of the at least one spatter removing blade may be tube-shaped.

According to an example, the at least one spatter removing blade is an inner spatter removing blade and is arranged adjacent to an inner surface of the movable positioning leg.

The inner spatter removing blade may be tube-shaped.

The inner spatter removing blade may have a diameter smaller than the diameter of the tube-shaped movable positioning leg.

The inner spatter removing blade may be arrangeable inside the cavity of the movable positioning leg.

According to an example, the at least one spatter removing blade is an outer spatter removing blade and is arranged adjacent to an outer surface of the movable positioning leg.

The outer spatter removing blade may comprise a ring-shaped portion or be ring-shaped.

The outer spatter removing blade may have a diameter larger than the diameter of the tube-shaped movable positioning leg.

The movable positioning leg may be arrangeable inside the outer spatter removing blade.

According to an example, the stud welding head further comprises both an inner spatter removing blade and an outer spatter removing blade.

According to an example, the inner spatter removing blade is mechanically coupled to the outer spatter removing blade via a through hole in the movable positioning leg.

The inner spatter removing blade may be rigidly fixed to the housing.

Additionally or alternatively, the outer spatter removing blade may be rigidly fixed to the housing.

The through hole may be elongated in the direction of the movement of the movable positioning leg.

The inner spatter removing blade may be mechanically coupled to the outer spatter removing blade via a plurality of through holes in the movable positioning leg.

The stud welding head according to the example above may advantageously improve the at least partial removal of the accumulated weld spatter by improving the mechanical stability of the inner and outer spatter removing blades.

According to an example, an extractor being coupled to an inside of the inner cavity of the movable positioning leg.

According to an example, the extractor is configured to extract a dust, a smoke, and/or a fume produced from the stud welding.

The extractor may be arranged radially inside the inner spatter removing blade.

Additionally or alternatively, the extractor may be arranged radially outside the inner spatter removing blade and inside the movable positioning leg.

Additionally or alternatively, the extractor may be arranged radially outside the movable positioning leg inside the outer spatter removing blade.

Additionally or alternatively, the extractor may be arranged radially outside the outer spatter removing blade.

According to an example, the extractor is configured to extract the at least partially removed weld spatter or a weld spatter produced from the stud welding.

The extractor may comprise a tube for transporting the extracted or suctioned component outside of the stud welding head.

The tube may be arranged radially inside the inner spatter removing blade and/or being arranged radially outside the outer spatter removing blade. This enables extracting or suctioning of the at least partially removed weld spatter.

According to an example, the stud welding head further comprises at least one actuator being kinematically interposed between the housing and the movable positioning leg.

The at least one actuator may be rigidly fixed to the housing.

The at least one actuator may be mechanically coupled to the movable positioning leg for moving the movable positioning leg.

According to an example, the at least one actuator is configured to move the movable positioning leg with respect to the housing.

According to an example, the at least one actuator comprises at least one of a hydraulic, electric, magnetic, thermal, or mechanical actuator.

According to an example, the at least one spatter removing blade comprises at least one tapering edge being configured to interact with the accumulated weld spatter in order to at least partially remove the accumulated weld spatter from the movable positioning leg.

The stud welding head according to the example above advantageously improves the mitigation of the weld-spatter accumulation on the movable positioning leg, specifically by a more effective cutting with the sharpened tapering edge.

According to an example, the movable positioning leg is at least partially coated with an anti-weld spatter coating.

A coating with the anti-weld spatter coating may reduce the accumulation of the weld-spatter on the coating material.

That is, when coated with the anti-weld spatter coating, the accumulation rate of the weld spatter may be reduced.

The stud welding head according to the example above advantageously improves the mitigation of the weld-spatter accumulation on the movable positioning leg, specifically by reducing he required frequency of manual or automatic removal of the accumulated weld spatter and/or replacing the parts with accumulated weld spatter.

According to an example, the anti-spatter coating is at least one of ceramic coating and casted iron coating.

According to a second aspect, there is provided a system for stud welding, the system comprising a robotic arm, and the stud welding head according to any one of the examples of the first aspect being attached to the robotic arm, wherein the robotic arm is configured to position the stud welding head for stud welding.

According to a third aspect, there is provided a method for stud welding, the method comprising at least partially removing a weld spatter accumulated on a moving a movable positioning leg by moving the movable positioning leg with respect to a housing of a stud welding head.

According to an example, the stud welding head is any one of the examples of the stud welding head of the first aspect disclosed herein.

According to an example, the method further comprises moving the movable positioning leg by extending from or retracting towards the housing in a single axis.

According to an example, the method further comprises controlling the at least one actuator.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates a system comprising a robotic arm and a stud welding head being attached to the robotic arm.
- Figure 2: illustrates a stud welding head according to an example of the present disclosure.
- Figure 3a): illustrates a stud welding head according to antoher example of the present disclosure.
- Figure 3b): illustrates a cross sectional view of the stud welding head shown in Figure 3a).
- Figure 4: illustrates a method according to an example of the present discourse.

### DETAILED DESCRIPTION

The Figures are merely schematic representations and serve only to illustrate examples of the disclosure. Identical or equivalent elements are in principle provided with the same reference signs.

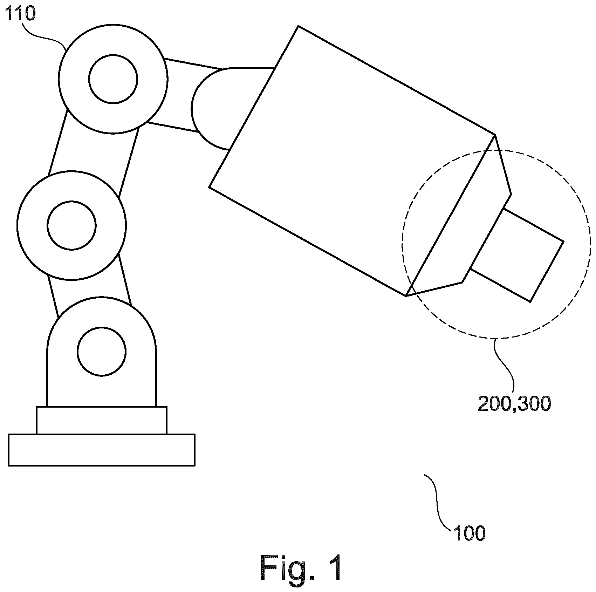

Figure 1 illustrates a system 100 for stud welding.

The system 100 comprises a robotic arm 110.

The system further comprises a stud welding head 200 being attached to the robotic arm 110.

The robotic arm 110 is configured to position the stud welding head 200 for stud welding.

The examples of the stud welding head 200 are further elaborated in reference to the following figures.

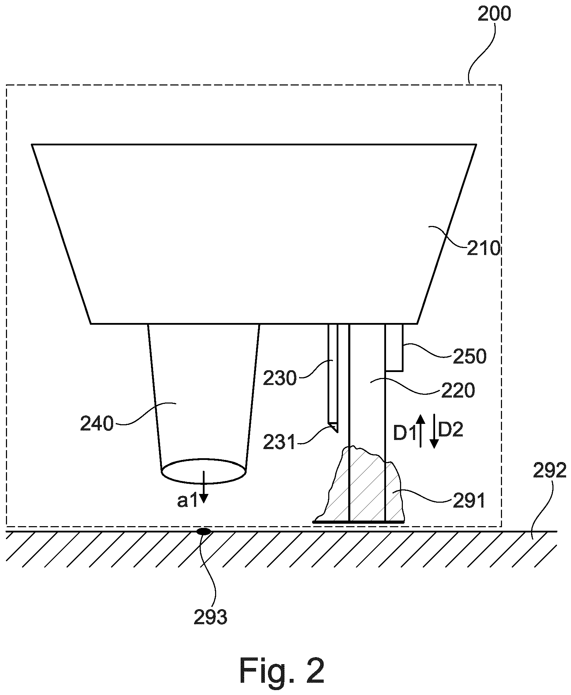

Figure 2 illustrates a stud welding head according to an example of the present disclosure.

The stud welding head 200 comprises a housing 210.

The stud welding head 200 further comprises a movable positioning leg 220.

The movable positioning leg 220 is cylindrical.

The stud welding head 200 further comprises a spatter removing blade 230.

The spatter removing blade 230 comprises a tapering edge.

The stud welding head 200 also comprises a stud guide 240 and an actuator 250.

The actuator 250 is rigidly fixed to an exterior of the housing 210 of the stud welding guide.

The actuator 250 is further kinematically interposed between the housing 210 and the movable positioning leg 220, such that actuating the actuator 250 is translated to a movement of the movable positioning leg 220.

Consequently, the movable positioning leg 220 moves with respect to the housing 210.

In a first actuation mode, the moveable positioning leg moves in a first direction D1, i.e., retracts into the housing 210.

In a second actuation mode, the movable positioning leg 220 moves in a second direction D2, i.e., extends from the housing 210.

For illustrative purposes, the state in which the movable positioning leg 220 is shown to be in Figure 2 is referred herein as an extended state.

The spatter removing blade 230 is rigidly fixed to the housing 210 adjacent to the movable positioning leg 220.

Specifically, the spatter removing blade 230 is arranged such that the thickness of the cutting edge 231 reduces along the second direction D2 of movement of the movable positioning leg 220.

Further, the non-tapered side of the cutting edge 231 is facing the movable positioning leg 220.

With the aforementioned arrangement, a retraction of the movable positioning leg 220 from the extended state brings a weld spatter accumulated on the surface of the movable positioning leg 220 into contact with the spatter removing blade 230, specifically firstly with the cutting edge 231 thereof.

A further retraction drives the spatter removing blade 230 into the accumulated weld spatter 291.

This in turn leads to at least partial removal of the accumulated weld spatter 291.

The cutting edge 231 further improves the effectiveness of the removal of the accumulated weld spatter 291.

The stud guide 240 is rigidly fixed to the housing 210.

The stud guide 240 is arranged for guiding a weld stud through a guiding axis a1.

The stud guide 240 holds the guided weld stud for stud welding on to a workpiece 292 at a welding point 293.

The movable positioning leg 220, specifically in its extended state, provides mechanical support by abutting the surface of the work piece.

This allows a stable positioning of the weld stud during stud welding.

During stud welding, the weld spatter scatters into the air, some of which accumulates onto the movable positioning leg 220.

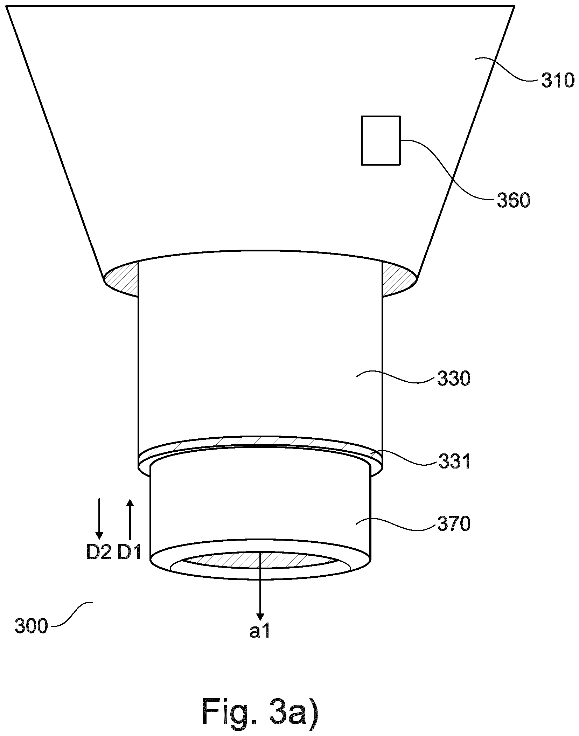

Referring to Figure 3a) and 3b), the following illustrates a stud welding head 300 according to another example of the present disclosure.

The stud welding head 300 comprises a housing 310.

The stud welding head 300 further comprises a movable positioning leg 320.

Moreover, the stud welding head 300 comprises an inner spatter removing blade 350 and an outer spatter removing blade 330.

Further the stud welding head 300 comprises a welding stud guide 340.

Further, the stud welding head 300 comprises an actuator 360.

The inner spatter removing blade 350 comprises a cutting edge 351 and the outer spatter removing blade 330 comprises a cutting edge 331.

The housing 310 comprises an inner cavity with a circular opening.

The movable positioning leg 320 is tube-shaped.

The movable positioning leg 320 is coated with anti-spatter coating 370.

The inner circumference of the circular opening is bigger than the outer circumference of the tube-shaped movable positioning leg 320 with the coating layer, such that the movable positioning leg 320 is arrangeable and movable through the circular inner cavity.

The movable positioning leg 320 is arranged through the circular inner cavity of the housing 310.

The inner cavity of the housing 310 further comprises an actuator 360 therein.

The actuator 360 is rigidly fixed to the housing 310, and is kinematically interposed between the housing 310 and the movable positioning leg 320 such that actuating the actuator 360 is translated to a movement of the movable positioning leg 320.

Consequently, the movable positioning leg 320 moves with respect to the housing 310.

In a first actuation mode, the moveable positioning leg moves in a first direction D1, i.e., retracts into the housing 310.

In a second actuation mode, the movable positioning leg 320 moves in a second direction D2, i.e., extends from the housing 310.

For illustrative purposes, the state in which the movable positioning leg 320 is shown to be in Figure 3a) and 3b) is referred herein as an extended state.

The outer spatter removing blade 330 is ring-shaped having an inner circumference larger than the outer circumference of the tube-shaped movable positioning leg 320 with the coating layer.

The outer spatter removing blade 330 is rigidly fixed to the housing 310.

The outer spatter removing blade 330 is arranged around the outer surface of the movable positioning leg 320, such that the movable positioning leg 320 is movable through the outer spatter removing blade 330.

The difference between the inner circumference of the outer spatter removing blade 330 and the outer circumference of the movable positioning leg 320 is small, thus the outer spatter removing blade 330 is arranged adjacent to the outer surface of the movable positioning leg 320.

Further, the outer spatter removing blade 330 is arranged such that the thickness of the cutting edge 331 reduces along the second direction D2 of movement of the movable positioning leg 320.

Moreover, the non-tapered side of the cutting edge 331 is facing the movable positioning leg 320.

With the aforementioned arrangement, a retraction of the movable positioning leg 320 from the extended state brings the weld spatter accumulated on the coated outer surface of the movable positioning leg 320 into contact with the outer spatter removing blade 330, specifically firstly with the cutting edge 331 thereof.

A further retraction drives the outer spatter removing blade 330 into the accumulated weld spatter.

This in turn leads to at least partial removal of the accumulated weld spatter.

The cutting edge 331 further improves the effectiveness of the removal of the accumulated weld spatter.

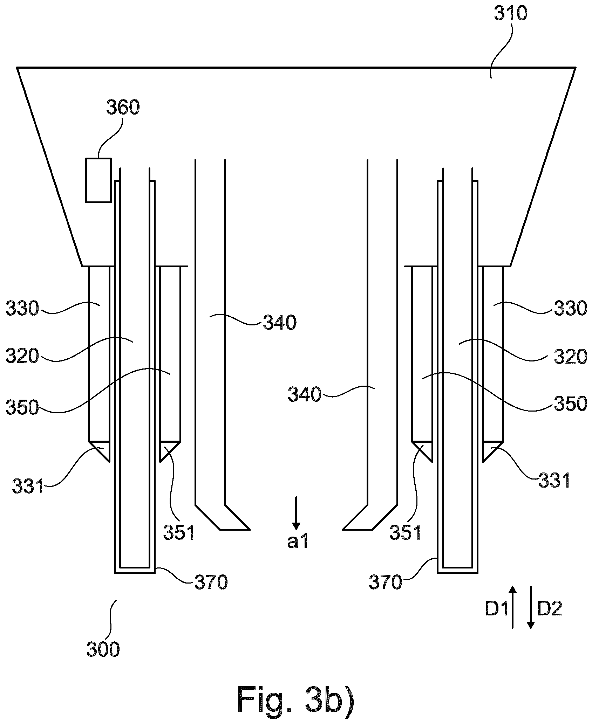

The stud weld head of Figure 3a) is further elaborated with the cross-sectional view thereof as shown in Figure 3b).

The inner spatter removing blade 350 is ring-shaped having an outer circumference smaller than the inner circumference of the tube-shaped movable positioning leg 320 with the coating layer.

The inner spatter removing blade 350 is rigidly fixed to the housing 310.

The inner spatter removing blade 350 is arranged around the inner surface of the movable positioning leg 320

The difference between the outer circumference of the inner spatter removing blade 350 and the inner circumference of the movable positioning leg 320 is small, thus the inner spatter removing blade 350 is arranged adjacent to the inner surface of the movable positioning leg 320.

Further, the inner spatter removing blade 350 is arranged such that the thickness of the cutting edge 351 reduces along the second direction D2 of movement of the movable positioning leg 320.

Moreover, the non-tapered side of the cutting edge 351 is facing the movable positioning leg 320.

With the aforementioned arrangement, a retraction of the movable positioning leg 320 from the extended state brings the weld spatter accumulated on the coated inner surface of the movable positioning leg 320 into contact with the inner spatter removing blade 350, specifically firstly with the cutting edge 351 thereof.

A further retraction drives the inner spatter removing blade 350 into the accumulated weld spatter.

This in turn leads to at least partial removal of the accumulated weld spatter.

The cutting edge 351 further improves the effectiveness of the removal of the accumulated weld spatter.

The stud guide 340 is rigidly fixed to the housing 310.

The stud guide 340 is arranged through the ring-shaped inner spatter removing blade 350.

The stud guide 340 is arranged for guiding a weld stud through a guiding axis a1.

The stud guide 340 holds the guided weld stud for stud welding on to a work piece at a welding point.

The movable positioning leg 320, specifically in its extended state, provides mechanical support by abutting the surface of the work piece.

This allows a stable positioning of the weld stud during stud welding.

During stud welding, the weld spatter scatters into the air, some of which accumulates onto the movable positioning leg 320.

It is noted that for simplicity, accumulated weld spatter is not shown in Figure 3a) and 3b).

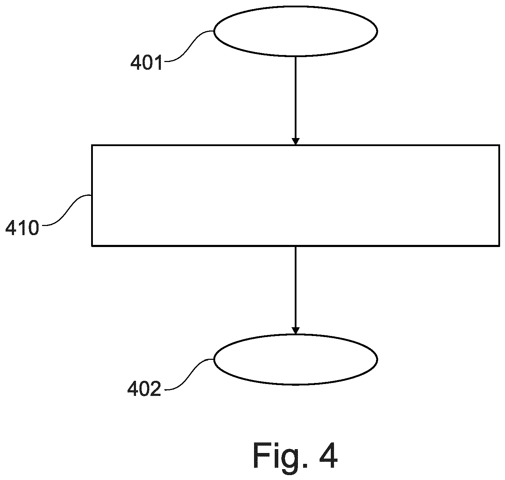

Figure 4 illustrates an exemplary method according to an embodiment of the present disclosure.

The method is for stud welding.

The method starts at 401.

At 410, a weld spatter accumulated on a moving a movable positioning leg is at least partially removed by moving the movable positioning leg with respect to a housing of a stud welding head.

The method ends at 402.

The stud welding head is any one of the examples of the first aspect disclosed herein.

The method according to an example further comprises moving the movable positioning leg by extending from or retracting towards the housing in a single axis.

The method according to another example further comprises controlling the at least one actuator.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: System
- 110: Robotic arm
- 120: Data processing apparatus
- 130: Data storage unit
- 140: Computer-readable storage medium
- 150: Computer program
- 160: Data processing unit
- 200: Stud welding head
- 210: Housing
- 220: Movable positioning leg
- 230: At least one spatter removing blade
- 231: Cutting edge of the at least one spatter removing blade
- 240: Stud guide
- 250: Actuator
- 291: Accumulated weld spatter
- 292: Workpiece
- 293: Welding point
- 300: Stud welding head
- 310: Housing
- 320: Movable positioning leg
- 330: Outer spatter removing blade
- 331: Cutting edge of the outer spatter removing blade
- 340: Stud guide
- 350: Inner spatter removing blade
- 351: Cutting edge of the inner spatter removing blade
- 360: Actuator
- 370: Anti-spatter coating
- D1: First direction
- D2: Second direction
- a1: Guiding axis
- 401: Start of the method
- 410: First step
- 402: End of the method

## Claims

1. A stud welding head (200) comprising a housing (210), a movable positioning leg (220) being configured to move with respect to the housing (210), and at least one spatter removing blade (230) being rigidly fixed to the housing (210), wherein a cutting edge (231) of the at least one spatter removing blade (230) is arranged adjacent to a surface of the movable positioning leg (220), such that a movement of the movable positioning leg (220) at least partially removes a weld spatter accumulated (291), from stud welding, on the surface of the movable positioning leg (220).

2. The stud welding head (200) of claim 1, wherein the movable positioning leg (220) is configured to move by extending from or retracting towards the housing (210) in a single axis, wherein the movable positioning leg (220) is abuttable to a surface for positioning the stud welding head (200) relative to a workpiece (292) during stud welding when in an extended state, and wherein a retraction of the movable positioning leg (220) at least partially removes the accumulated weld spatter (291).

3. The stud welding head (200) of claim 1 or 2, further comprising a stud guide (240) being rigidly fixed to the housing (210), wherein the movable positioning leg (220) is movable in parallel with a guiding axis through which a welding stud is guidable through the stud guide (240).

4. The stud welding head (200) of claim 3, wherein the movable positioning leg (220) has an inner cavity, and wherein the stud guide (240) is arranged inside the inner cavity of the movable positioning leg (220).

5. The stud welding head (200) of claim 4, wherein the movable positioning leg (220) is tube-shaped.

6. The stud welding head (200) of claim 4 or 5, wherein the at least one spatter removing blade (230) comprises a curved section or is curved.

7. The stud welding head (200) of any one of claims 4 to 6,
wherein the at least one spatter removing blade (230) is an inner spatter removing blade (350) and is arranged adjacent to an inner surface of the movable positioning leg (220), and/or
wherein the at least one spatter removing blade (230) is an outer spatter removing blade (330) and is arranged adjacent to an outer surface of the movable positioning leg (220).

8. The stud welding head (200) of claim 7, comprising both an inner spatter removing blade (350) and an outer spatter removing blade (330), wherein the inner spatter removing blade (350) is mechanically coupled to the outer spatter removing blade (330) via a through hole in the movable positioning leg (220).

9. The stud welding head (200) of any one of claims 4 to 8, further comprising an extractor being coupled to an inside of the inner cavity of the movable positioning leg (220), wherein the extractor is configured to extract a dust, a smoke, and/or a fume produced from the stud welding, and/or wherein the extractor is configured to extract the at least partially removed weld spatter or a weld spatter produced from the stud welding.

10. The stud welding head (200) of any one of the preceding claims, further comprising at least one actuator being kinematically interposed between the housing (210) and the movable positioning leg (220), and wherein the at least one actuator is configured to move the movable positioning leg (220) with respect to the housing (210).

11. The stud welding head (200) of claim 10, wherein the at least one actuator comprises at least one of a hydraulic, electric, magnetic, thermal, or mechanical actuator.

12. The stud welding head (200) of any one of the preceding claims, wherein the at least one spatter removing blade (230) comprises at least one tapering edge being configured to interact with the accumulated weld spatter (291) in order to at least partially remove the accumulated weld spatter (291) from the movable positioning leg (220).

13. The stud welding head (200) of any one of the preceding claims, wherein the movable positioning leg (220) is at least partially coated with an anti-weld spatter coating.

14. The stud welding head (200) of claim 13, wherein the anti-spatter coating is at least one of ceramic coating and casted iron coating.

15. A system (100) for stud welding, the system comprising a robotic arm, and the stud welding head (200) according to any one of claims 1 to 14 being attached to the robotic arm (110), wherein the robotic arm (110) is configured to position the stud welding head (200) for stud welding.
